# EUROPÄISCHE PATENTSCHRIFT

(11) **EP 1 029 621 B1**
(45) Veröffentlichungstag und Bekanntmachung des Hinweises auf die Patenterteilung: **31.10.2001**
(21) Anmeldenummer: 00102488.4
(22) Anmeldetag: 05.02.2000
(51) Int. Cl.: B23B 31/12

(54) **Bohrfutter**
Drill chuck
Mandrin porte-foret

(30) Priorität: 20.02.1999 DE 19907331
(43) Veröffentlichungstag der Anmeldung: 23.08.2000
(73) Patentinhaber: Röhm GmbH, 89567 Sontheim (DE)
(72) Erfinder: Röhm, Günter Horst, 89567 Sontheim (DE)
(74) Vertreter: Hentrich, Swen Dipl.-Phys. Dr.

(56) Entgegenhaltungen:
- EP-A- 0 710 518
- EP-A- 0 785 041

## Beschreibung

Die Erfindung betrifft ein Bohrfutter mit einem in seinem axial hinteren Körperabschnitt eine Spindelaufnahme und in seinem axial vorderen Körperabschnitt eine Werkzeugaufnahme aufweisenden Futterkörper, in dem geneigt zur Futterachse verlaufende Führungsbohrungen für die Spannbacken ausgebildet sind, die mit einer Verzahnung in ein Spanngewinde eines Spannrings eingreifen, an dem ein Zwischenring drehfest angeschlossen ist, ferner mit einer der Verstellung des Spannrings dienenden, begrenzt gegenüber dem Zwischenring verdrehbaren Spannhülse und einer zwischen der Spannhülse und dem Futterkörper ausgebildeten Sperreinrichtung, bestehend aus einem Kranz von Sperrausnehmungen und einem zwischen dem an den Sperrausnehmungen eingerückten Zustand und dem an den Sperrausnehmungen ausgerückten Zustand verstellbaren Sperrglied.

Derartige Bohrfutter sind beispielsweise aus der EP 0 785 041 A1 bekannt und haben sich in der Praxis bewährt, da diese einen relativ einfachen Aufbau haben und es möglich ist, allein durch fortgesetztes Drehen der Spannhülse in eine Richtung das Bohrfutter zu spannen und zu verriegeln, um im Bohrbetrieb ein Lösen zu verhindern. Zum gezielten Lösen der Spannung eines Bohrwerkzeuges ist nur die Verdrehung der Spannhülse in die entgegengesetzte Richtung notwendig, so daß derartig bekannte Bohrfutter einfach zu bedienen sind und auch im Heimwerkerbereich sicher eingesetzt werden können. Diese Vorteile haben dazu geführt, daß dieses Bohrfutter immer weitere Verbreitung findet und nicht nur an leistungsstarken Bohrmaschinen eingesetzt, sondern auch mit leistungsschwächeren oder akkubetriebenen Bohrmaschinen oder Bohrschraubern gekoppelt wird. Dadurch ergibt sich ein Kostendruck mit dem Zwang, das Bohrfutter kostengünstiger herstellen zu können.

Der Erfindung liegt daher die Aufgabe zugrunde, ein Bohrfutter der eingangs genannten Art so weiterzubilden, daß die Gesamtkosten der Herstellung seiner Einzelteile und der Montage reduziert werden können.

Diese Aufgabe wird nach der Erfindung bei einem Bohrfutter der eingangs genannten Art dadurch gelöst, daß die Sperrausnehmungen an einem der axial rückwärtigen Abstützung des Spannringes dienendem Lagerring ausgebildet sind, daß der Lagerring und der Spannring ungebrochen, einteilig ausgeführt sind mit einem den Außendurchmesser des axial vorderen Körperabschnitts übersteigenden Innendurchmesser, und daß der Spannring an dem Zwischenring, dieser an der Spannhülse und diese wiederum über eine Schnappverbindung axial nach vorne an dem Futterkörper abgestützt ist.

Dieses Bohrfutter bietet zunächst einmal den Vorteil, daß die Bearbeitung des Futterkörpers vereinfacht ist, weil zum einen in dessen vorderen Körperabschnitt keine Sperrausnehmungen eingearbeitet werden müssen, zum anderen weist der Futterkörper in seinem vorderen Körperabschnitt eine einfach strukturierte, im wesentlichen zylindrische Form auf, die einfach herzustellen ist und weniger spanende Bearbeitung erfordert. Diese einfache Form ermöglicht in Verbindung mit der Zuordnung der Sperrausnehmungen zu dem Lagerring und der axialen Abstützung von Spannring und Lagerring über den Zwischenring, daß das gesamte Bohrfutter durch einfache Steckvorgänge montiert werden kann, wobei zum Abschluß des Steckvorganges die Schnappverbindung zwischen Spannhülse und Futterkörper einrastet, ohne daß nach dieser rein axialen Steckbewegung noch zusätzlich Sicherungsringe oder dergleichen montiert werden müssen, was allerdings gleichwohl möglich ist.

Eine vorteilhafte Weiterbildung des erfindungsgemäßen Bohrfutter zeichnet sich weiterhin dadurch aus, daß die Spannhülse eine zur Anlage am vorderen Körperabschnitt kommende und der radialen Führung dienende Anlagefläche aufweist, die axial nach hinten sich bis zu dem Austritt der Führungsbohrungen der Spannbacken aus dem Futterkörper erstreckt. Diese Ausgestaltung, bei der die radiale Führung der Spannhülse sowie der damit gekoppelten Bauteile verbessert wird, ist erst dadurch möglich geworden, daß die Sperrausnehmungen nicht mehr am axial vorderen Körperabschnitt ausgebildet werden müssen und auch der Zwischenring in seiner axialen Erstreckung kürzer ausgeführt werden kann, was im übrigen auch bereits schon einen Kostenvorteil darstellt.

Es hat sich als zweckmäßig erwiesen, daß die Schnappverbindung durch eine Rastnase gebildet ist, die in eine am vorderen Körperabschnitt in Umfangsrichtung verlaufende Nut eingreift und in einer Hülsentasche angeordnet ist. Von den zur Ausbildung der Schnappverbindung notwendigen Strukturen am axial vorderen Körperabschnitt läßt sich eine in Umfangsrichtung verlaufende Nut am einfachsten und kostengünstigsten herstellen, wobei diese Nut mit einer oder besser noch mehreren gleichmäßig über den Umfang verteilt angeordneten Rastnasen zusammenwirkt, für die entsprechend Hülsentaschen in der Spannhülse ausgebildet sein müssen, um kurzfristig beim Aufstecken auf den Futterkörper kurz vor dem Einrasten in die Nut zurückweichen zu können.

Die notwendige axiale Abstützung des Spannrings wird am einfachsten dadurch erreicht, daß der Zwischenring eine Ringschulter als Lager für den Spannring aufweist.

Nach einer weiteren Ausführungsform ist im Rahmen der Erfindung vorgesehen, daß am axial hinteren Ende des Futterkörpers eine Abschlußscheibe angeordnet ist, die der radialen Führung der Spannhülse dient. Neben der längeren radialen Führungsfläche am axial vorderen Körperabschnitt ist durch die Abschlußscheibe am axial entgegengesetzten Ende der Spannhülse eine weitere radiale Führung gewährleistet, die somit insgesamt sehr verläßlich gegeben ist.

Zweckmäßigerweise ist auch die Abschlußscheibe über eine Schnappverbindung axial am Futterkörper festgelegt. Diese Schnappverbindung bietet den Vorteil, daß auf die bisher übliche Rändelung am Futterkörper und an der Abschlußscheibe verzichtet werden kann, die mit großer Genauigkeit ausgebildet werden müßte, dazu ein zusätzliches Werkzeug und insgesamt eine große Fertigungsdauer erfordert.

In diesem Zusammenhang hat es sich als zweckmäßig erwiesen, daß am hinteren Körperabschnitt eine Ringnut und benachbart eine Schulter ausgebildet ist, und daß die Abschlußscheibe einen zur Anlage an der Schulter kommenden und in die Ringnut eingreifenden Ring aufweist, der aufgrund in der Abschlußscheibe angeordneter Öffnungen vor der Nutwandung zurückweichen und in die Ringnut eintreten kann.

Im Rahmen eines vorteilhaften Ausgestaltung der Erfindung ist weiterhin vorgesehen, daß der Lagerring Laschen aufweist, die in die Führungsbohrungen der Spannbacken eingehakt sind. Da der Lagerring zugleich auch Teil der Verriegelungseinrichtung ist, die gegen eine in Umfangsrichtung verlaufende Verdrehung der Spannhülse sichern soll, muß gewährleistet sein, daß der Lagerring nicht auf dem Futterkörper wandern kann. Genau dies wird durch die in die Führungsbohrungen eingehakten Laschen erreicht.

Diese Laschen können aber noch einen zusätzlichen Vorteil bieten, wenn sie sich axial nach vorn erstrecken und eine Führungsfläche für die Spannbacken aufweisen, das Spiel der Spannbacken in den Führungsbohrungen damit reduziert werden kann.

Im Rahmen einer Weiterbildung der Erfindung ist weiterhin vorgesehen, daß die Schnappverbindung durch einen Schnappring gebildet ist, der in eine in Umfangsrichtung verlaufende, am Futterkörper ausgebildete Ringnut einschiebbar ist. Da die Schnappverbindung nicht einstückig mit der Spannhülse ausgebildet ist, kann diese in der Form einfach gestaltet sein und am axial vorderen Ende eine längere radiale Führungsfläche aufweisen.

Prinzipiell besteht dabei die Möglichkeit, daß der Schnappring aus Gummi oder einem Elastomer besteht und nach dem Aufweiten bei dem Aufschieben über den Futterkörper in die Ringnut einschnappt und dort verharrt. Hinsichtlich einer größeren Belastbarkeit ist es jedoch bevorzugt, wenn der Schnappring aus Metall besteht und in Umfangsrichtung nicht geschlossen ist. Dies eröffnet dann zusätzlich die Möglichkeit, daß der Schnappring radial aufgesteckt wird und nicht zwingend über das axiale Ende des Futterkörpers aufgeschoben werden muß.

Für ein derartiges Aufschieben bzw für die Montage der Einzelteile des Bohrfutters durch eine Steckbewegung ist es vorteilhaft, wenn an dem axial vorderen Ende des Futterkörpers eine Anlaufschräge ausgebildet ist.

Um höheren Belastungen widerstehen zu können, insbesondere wenn die Spannhülse aus einem Kunststoff gefertigt ist, ist vorgesehen, daß auf dem axial vorderen Ende der Spannhülse eine Schutzkappe angeordnet ist, die durch einen in die in Umfangsrichtung verlaufende, am Futterkörper ausgebildete Ringnut eingreifenden Sprengring gesichert ist.

Zur Reduktion der für die Montage des Bohrfutter benötigten Bestandteile ist es möglich, daß der Sprengring durch den Schnappring gebildet ist.

Im folgenden soll die Erfindung an in der Zeichnung dargestellten Ausführungsbeispielen näher erläutert werden; es zeigen:

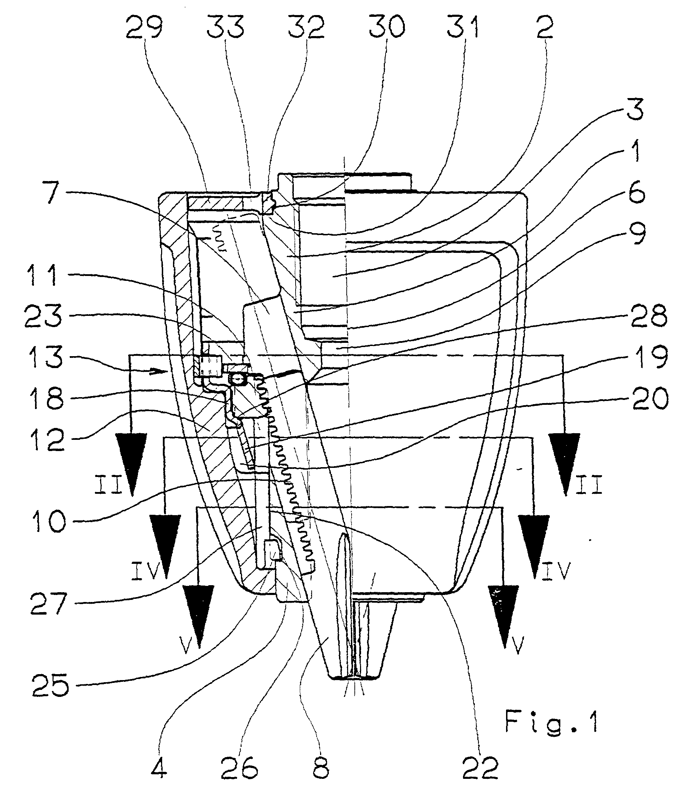

- Fig. 1: ein Bohrfutter nach der Erfindung, links in einem Axialschnitt, rechts in einer Seitenansicht,
- Fig. 2: der Schnitt II-II aus Fig. 1 mit der Sperreinrichtung in der ausgerasteten Stellung,
- Fig. 3: eine der Fig. 2 entsprechende Darstellung mit der Sperreinrichtung in der eingerasteten Stellung,

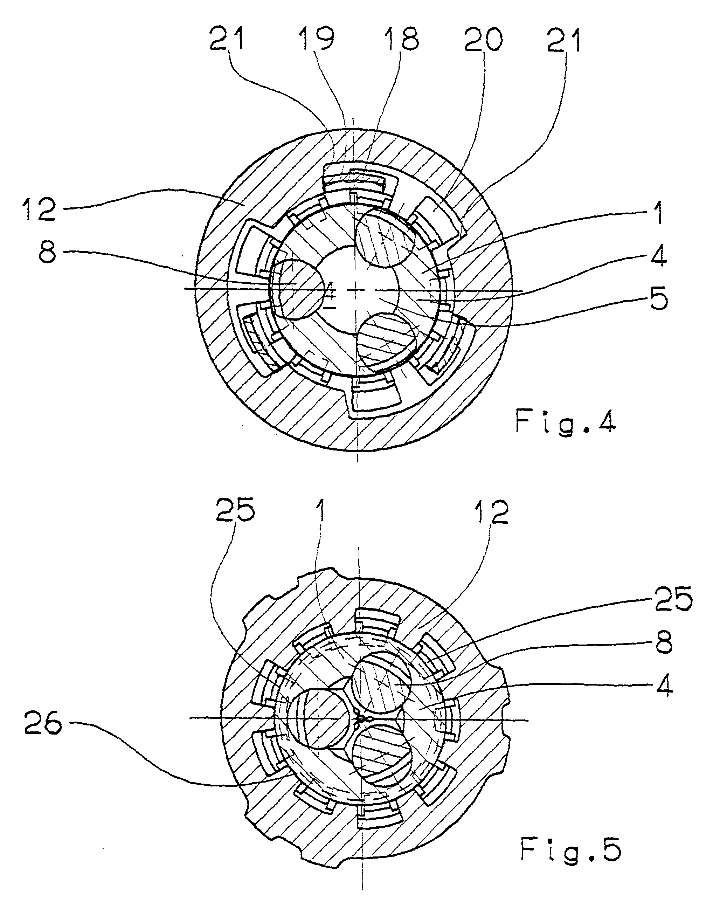

- Fig. 4: den Schnitt IV-IV aus Fig. 1 mit den in Aussparungen der Spannhülse ragenden Anschlagstücken des Zwischenrings,
- Fig. 5: den Schnitt V-V aus Fig. 1 mit einer Draufsicht auf die Rastnasen, die in die in Umfangsrichtung am Futterkörper verlaufende Nut eingreifen,
- Fig. 6: eine der Fig. 1 entsprechende Darstellung einer weiteren Ausführungsform, und
- Fig. 7: eine der Fig. 1 entsprechende Darstellung eines Bohrfutters mit einer an dem Futterkörper befestigten Schutzkape.

Das in der Zeichnung dargestellte Bohrfutter weist einen Futterkörper 1 auf, der einen axial hinteren Körperabschnitt 2, in dem eine Spindelaufnahme 3 zur Kopplung mit einer in der Zeichnung nicht dargestellten Bohrspindel ausgebildet ist, und einen axial vorderen Körperabschnitt 4 besitzt, in dem eine Werkzeugaufnahme 5 ausgebildet ist, in die geneigt zur Futterachse 6 verlaufende Führungsbohrungen 7 münden, in deren Längsrichtung verstellbar Spannbacken 8 zum Spannen eines ebenfalls in der Zeichnung nicht dargestellten Bohrwerkzeuges geführt sind. Die Spindelaufnahme 3 sowie die Werkzeugaufnahme 5 sind durch einen axialen Durchgang 9 miteinander verbunden, der dazu dient, bei in der Bohrspindel axial verstellbar geführten Döppern oder Schlägern für den Schlagbohrbetrieb die Schlagwirkung unmittelbar auf das Schaftende des Bohrwerkzeuges einwirken zu lassen.

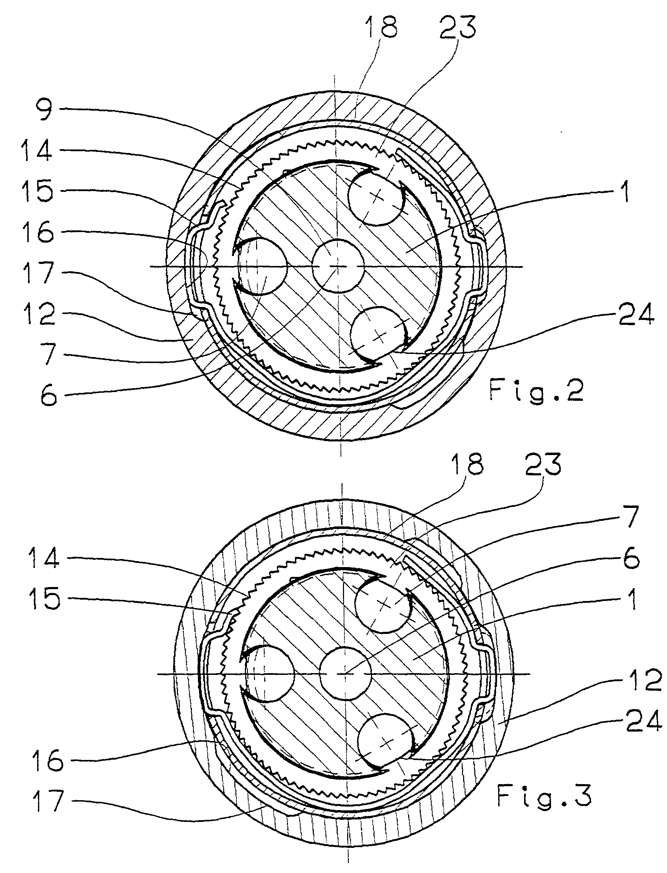

Die Spannbacken 8 greifen mit einer Verzahnung 10 in ein Spanngewinde eines Spannringes 11 ein, der am Futterkörper 1 axial unverschiebbar und drehbar geführt ist und zum Spannen und Lösen des Bohrfutters mit Hilfe einer ebenfalls unverschiebbaren Spannhülse 12 von Hand relativ zum Futterkörper 1 verdreht werden kann und dabei die Spannbacken 8 in ihren Führungsbohrungen 7 verstellt. Um unerwünschte Verstellungen der Spannbacken 8 zu verhindern, kann die Drehstellung des Spannrings 11 fixiert werden. Dazu dient eine zwischen dem Spannring 11 und dem Futterkörper 1 ausgebildete Sperreinrichtung 13, die aus einem koaxialen Kranz 14 von Sperrausnehmungen und aus mindestens einem Sperrglied 15 besteht, das unter Federkraft im wesentlichen radial von außen nach innen in die Sperrausnehmungen 14 eingreift. Das Sperrglied 15 kann zwischen seinen an den Sperrausnehmungen 14 eingerückten Zuständen (Fig. 3) und ausgerückten Zuständen (Fig. 2) verstellt werden, wozu das Sperrglied 14 durch eine an dem inneren Mantel 16 der Spannhülse 12 ausgebildete Steuerkurve 17 verstellbar und entsprechend die Spannhülse 12 relativ zum Spannring 11 verdrehbar ist. Diese Verdrehung der Spannhülse 12 relativ zum Spannring 11 ist in beiden Drehrichtungen formschlüssig begrenzt, wozu ein Zwischenring 18 vorgesehen ist, der drehfest mit dem Spannring 11 verbunden ist und dem gegenüber die Spannhülse 12 begrenzt verdreht werden kann, wobei zur Drehbegrenzung Anschlagstücke 19 vorgesehen sind, die in Aussparungen 20 in der Spannhülse 12 eingreifen, wobei das Anschlagstück 19 an den Enden des Drehwegs jeweils mit einer der die Aussparungen 20 in Umfangsrichtung begrenzenden Stirnfläche 21 zum Anschlag kommt. Um eine radiale Führung der Spannhülse 12 nicht nur durch den Zwischenring 18 zu bewirken, weist die Spannhülse 12 eine zur Anlage am vorderen Körperabschnitt 4 kommende und der radialen Führung dienende Anlagefläche 22 auf, die axial nach hinten sich bis zu dem Austritt der Führungsbohrungen 7 der Spannbacken 8 aus dem Futterkörper 1 erstreckt.

Um dies zu ermöglichen, ist die Sperreinrichtung 13 nicht am axial vorderen Ende des Futterkörpers 1 angeordnet, sondern axial nach hinten verlegt, wobei die Sperrausnehmungen 14 an einem der axial rückwärtigen Abstützung des Spannringes 11 dienenden Lagerring 23 ausgebildet sind, der somit mehrere Funktionen übernimmt. Um mit Sicherheit die Funktion der Sperreinrichtung 13 zu gewährleisten und ein Wandern des Lagerringes 23 in Umfangsrichtung auf dem Futterkörper 1 zu verhindern, sind an dem Lagerring 23 Laschen 24 ausgebildet, die in die Führungsbohrungen 7 der Spannbacken 8 eingehakt sind und so eine Verdrehung verhindern und zugleich infolge ihrer axial nach vorne reichenden Erstreckung eine Führungsfläche für die Spannbacken 8 darstellen.

Der Lagerring 23 sowie der Spannring 11 weisen einen den Außendurchmesser des axial vorderen Körperabschnitts 4 übersteigenden Innendurchmesser auf, so daß diese ungebrochen ausgeführt werden können und das gesamte Bohrfutter durch einfache Steckvorgänge montiert werden kann. Bei diesem Steckvorgang wird eine axiale Sicherung der Bauteile über eine zwischen der Spannhülse 12 und dem Futterkörper 1 ausgebildete Schnappverbindung erreicht, die durch mehrere gleichmäßig über den Umfang verteilt angeordnete und an der Spannhülse 12 ausgebildete Rastnasen 25 realisiert ist, die in eine am vorderen Körperabschnitt 4 des Futterkörpers 1 in Umfangsrichtung verlaufende Nut 26 eingreifen, wobei zum kurzfristigen Zurückweichen der Rastnasen 25 beim Aufstecken auf den Futterkörper 1 diese in Hülsentaschen 27 angeordnet sind. Der Zwischenring 18 besitzt weiterhin zur axialen Abstützung und als Lager für den Spannring 11 eine Ringschulter 28.

Am axial hinteren Ende des Futterkörpers 1 ist eine über eine Schnappverbindung axial im Futterkörper 1 festgelegte Abschlußscheibe 29 angeordnet, die die radiale Führung der Spannhülse 12 unterstützt. Die Schnappverbindung ist so gestaltet, daß am hinteren Körperabschnitt eine Ringnut 30 und benachbart eine Schulter 31 ausgebildet ist, wobei die Abschlußscheibe 29 einen zur Anlage an der Schulter 31 kommenden und in die Ringnut 30 eingreifenden Ring 32 aufweist, der aufgrund in der Abschlußscheibe 29 angeordneter Öffnungen 33 vor der Nutwandung zurückweichen und in die Ringnut 30 eintreten kann.

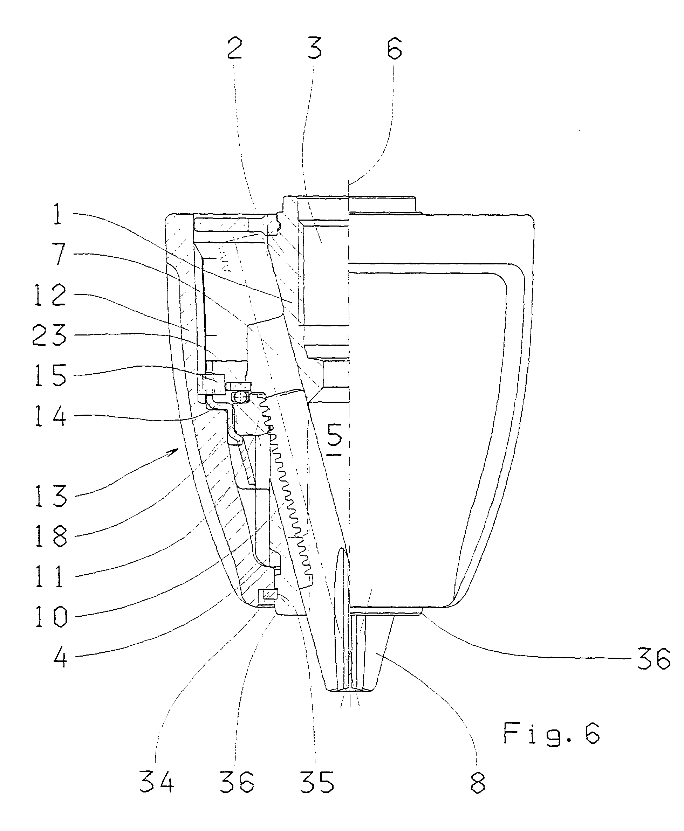

Bei der in der Fig. 6 gezeigten Ausführungsform ist die Schnappverbindung durch einen Schnappring (34) gebildet, der in eine in Umfangsrichtung verlaufende, am Futterkörper (1) ausgebildete Ringnut (35) einschiebbar ist, wobei der Schnappring (34) aus Metall besteht und in Umfangsrichtung nicht geschlossen ist, damit er sich für das Einführen in die Ringnut (35) aufweiten läßt und in dieser Federkraft sicher hält. Zur Erleichterung des Aufschiebens ist an dem axial vorderen Ende des Futterkörpers (1) eine Anlaufschräge (36) ausgebildet ist.

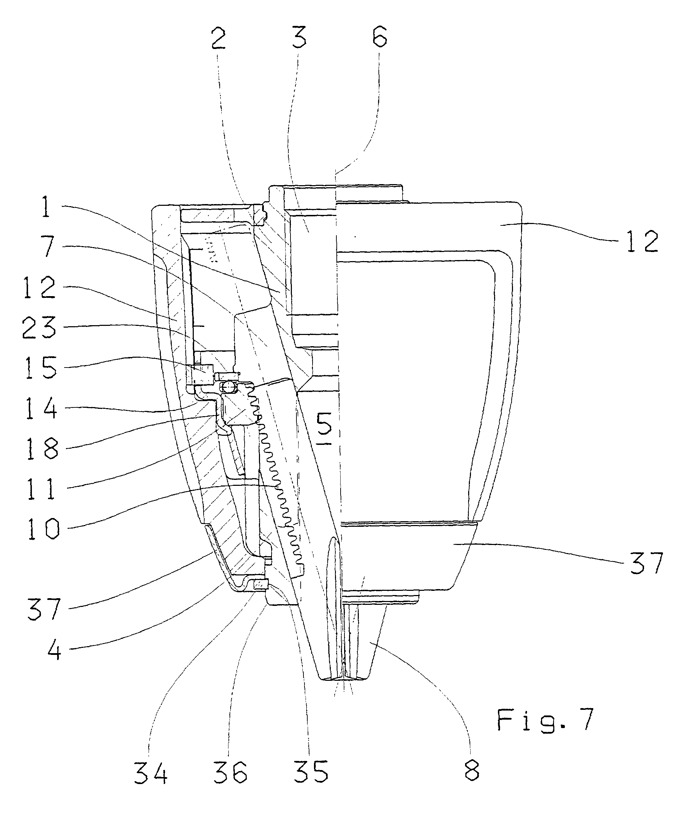

In Fig. 7 ist eine Ausführungsform gezeigt, bei der auf dem axial vorderen Ende der Spannhülse (12) eine Schutzkappe (37) angeordnet ist, die durch einen in die in Umfangsrichtung verlaufende, am Futterkörper (1) ausgebildete Ringnut (35) eingreifenden Sprengring (38) gesichert ist, wobei der Sprengring (38) durch den Schnappring (34) gebildet ist, diese also einstückig ausgeführt sind.

## Patentansprüche

1. Bohrfutter mit einem in seinem axial hinteren Körperabschnitt (2) eine Spindelaufnahme (3) und in seinem axial vorderen Körperabschnitt (4) eine Werkzeugaufnahme (5) aufweisenden Futterkörper (1), in dem geneigt zur Futterachse (6) verlaufende Führungsbohrungen (7) für die Spannbacken (8) ausgebildet sind, die mit einer Verzahnung (10) in ein Spanngewinde eines Spannrings (11) eingreifen, an dem ein Zwischenring (18) drehfest angeschlossen ist, ferner mit einer der Verstellung des Spannrings (11) dienenden, begrenzt gegenüber dem Zwischenring (18) verdrehbaren Spannhülse (12) und einer zwischen der Spannhülse (12) und dem Futterkörper (1) ausgebildeten Sperreinrichtung (13), bestehend aus einem Kranz von Sperrausnehmungen (14) und einem zwischen dem an den Sperrausnehmungen (14) eingerückten Zustand und dem an den Sperrausnehmungen (14) ausgerückten Zustand verstellbaren Sperrglied (15), **dadurch gekennzeichnet, daß** die Sperrausnehmungen (14) an einem der axial rückwärtigen Abstützung des Spannringes (11) dienendem Lagerring (23) ausgebildet sind, daß der Lagerring (23) und der Spannring (11) ungebrochen, einteilig ausgeführt sind mit einem den Außendurchmesser des axial vorderen Körperabschnitts (4) übersteigendem Innendurchmesser, und daß der Spannring (11) an dem Zwischenring (18), dieser an der Spannhülse (12) und diese wiederum über eine Schnappverbindung axial nach vorne an dem Futterkörper (1) abgestützt ist.

2. Bohrfutter nach Anspruch 1, **dadurch gekennzeichnet, daß** die Spannhülse (12) eine zur Anlage am vorderen Körperabschnitt (4) kommende und der radialen Führung dienende Anlagefläche (22) aufweist, die axial nach hinten sich bis zu dem Austritt der Führungsbohrungen (7) der Spannbacken (8) aus dem Futterkörper (1) erstreckt.

3. Bohrfutter nach Anspruch 1 oder 2, **dadurch gekennzeichnet, daß** die Schnappverbindung durch eine Rastnase (25) gebildet ist, die in eine am vorderen Körperabschnitt (4) in Umfangsrichtung verlaufende Nut (26) eingreift und in einer Hülsentasche (27) angeordnet ist.

4. Bohrfutter nach Anspruch 3, **dadurch gekennzeichnet, daß** mehrere gleichmäßig über den Umfang verteilt angeordnete Rastnasen (25) vorhanden sind.

5. Bohrfutter nach einem der Ansprüche 1 bis 4, **dadurch gekennzeichnet, daß** der Zwischenring (18) eine Ringschulter (28) als Lager für den Spannring (11) aufweist.

6. Bohrfutter nach einem der Ansprüche 1 bis 5, **dadurch gekennzeichnet, daß** am axial hinteren Ende des Futterkörpers (1) eine Abschlußscheibe (29) angeordnet ist, die der radialen Führung der Spannhülse (12) dient.

7. Bohrfutter nach Anspruch 6, **dadurch gekennzeichnet, daß** die Abschlußscheibe (29) über eine Schnappverbindung axial am Futterkörper (1) festgelegt ist.

8. Bohrfutter nach Anspruch 7, **dadurch gekennzeichnet, daß** am hinteren Körperabschnitt (2) eine Ringnut (30) und benachbart eine Schulter (31) ausgebildet ist, und daß die Abschlußscheibe (29) einen zur Anlage an der Schulter (31) kommenden und in die Ringnut (30) eingreifenden Ring (32) aufweist, der aufgrund in der Abschlußscheibe (29) angeordneter Öffnungen (33) vor der Nutwandung zurückweichen und in die Ringnut (30) eintreten kann.

9. Bohrfutter nach einem der Ansprüche 1 bis 8, **dadurch gekennzeichnet, daß** der Lagerring (23) Laschen (24) aufweist, die in die Führungsbohrungen (7) der Spannbacken (8) eingehakt sind.

10. Bohrfutter nach Anspruch 9, **dadurch gekennzeichnet, daß** die Laschen (24) sich axial nach vorn erstrecken und eine Führungsfläche für die Spannbacken (8) aufweisen.

11. Bohrfutter nach Anspruch 1 oder 2, **dadurch gekennzeichnet, daß** die Schnappverbindung durch einen Schnappring (34) gebildet ist, der in eine in Umfangsrichtung verlaufende, am Futterkörper (1) ausgebildete Ringnut (35) einschiebbar ist.

12. Bohrfutter nach Anspruch 11, **dadurch gekennzeichnet, daß** der Schnappring (34) aus Metall besteht und in Umfangsrichtung nicht geschlossen ist.

13. Bohrfutter nach einem der Ansprüche 1 bis 12, **dadurch gekennzeichnet, daß** an dem axial vorderen Ende des Futterkörpers (1) eine Anlaufschräge (36) ausgebildet ist.

14. Bohrfutter nach einem der Ansprüche 1 bis 13, **dadurch gekennzeichnet, daß** auf dem axial vorderen Ende der Spannhülse (12) eine Schutzkappe (37) angeordnet ist, die durch einen in die in Umfangsrichtung verlaufende, am Futterkörper (1) ausgebildete Ringnut (35) eingreifenden Sprengring (38) gesichert ist.

15. Bohrfutter nach Anspruch 14, **dadurch gekennzeichnet, daß** der Sprengring (38) durch den Schnappring (34) gebildet ist.

## Claims

1. A drilling chuck comprising a chuck body (1) which in its axially rearward body portion (2) has a spindle receiving means (3) and in its axially forward body portion (4) a tool receiving means (5) and in which are provided guide bores (7) extending inclinedly with respect to the chuck axis (6) for the clamping jaws (8) which engage with a tooth arrangement (10) into a clamping screwthread of a clamping ring (11) to which an intermediate ring (18) is non-rotatably connected, further comprising a clamping sleeve (12) which serves for displacement of the clamping ring (11) and which is limitedly rotatable with respect to the intermediate ring (18), and a locking device (13) which is provided between the clamping sleeve (12) and the chuck body (1) and comprising a ring of locking openings (14) and a locking member (15) displaceable between the condition of being engaged at the locking openings (14) and the condition of being disengaged at the locking openings (14), **characterised in that** the locking openings (14) are provided on a mounting ring (23) serving for axially rearward support for the clamping ring (11), that the mounting ring (23) and the clamping ring (11) are of a unbroken one-piece configuration of an inside diameter which exceeds the outside diameter of the axially forward body portion (4), and that the clamping ring (11) is supported at the intermediate ring (18), the latter is supported at the clamping sleeve (12), and the latter is in turn supported by way of a snap connection axially forwardly at the chuck body (1).

2. A drilling chuck according to claim 1 **characterised in that** the clamping sleeve (12) has an abutment surface (22) which comes to bear against the front body portion (4) and serves for radial guidance and which extends axially rearwardly to the exit of the guide bores (7) for the clamping jaws (8) from the chuck body (1).

3. A drilling chuck according to claim 1 or claim 2 **characterised in that** the snap connection is formed by a retaining projection (25) which engages into a groove (26) extending in the peripheral direction on the front body portion (4), and is arranged in a sleeve pocket (27).

4. A drilling chuck according to claim 3 **characterised in that** there are a plurality of retaining projections (25) arranged distributed uniformly over the periphery.

5. A drilling chuck according to one of claims 1 to 4 **characterised in that** the intermediate ring (18) has an annular shoulder (28) as a mounting for the clamping ring (11).

6. A drilling chuck according to one of claims 1 to 5 **characterised in that** arranged at the axially rearward end of the chuck body (1) is a closure plate (29) which serves for radial guidance of the clamping sleeve (12).

7. A drilling chuck according to claim 6 **characterised in that** the closure plate (29) is fixed axially to the chuck body (1) by way of a snap connection,

8. A drilling chuck according to claim 7 **characterised in that** provided on the rear body portion (2) is an annular groove (30) and in adjacent relationship a shoulder (31), and that the closure plate (29) has a ring (32) which comes to bear against the shoulder (31) and which engages into the annular groove (30) and which, by virtue of apertures (33) arranged in the closure plate (29), can move back from the groove wall and can pass into the annular groove (30).

9. A drilling chuck according to one of claims 1 to 8 **characterised in that** the mounting ring (23) has tongues (24) which are hooked into the guide bores (7) of the clamping jaws (8).

10. A drilling chuck according to claim 9 **characterised in that** the tongues (24) extend axially forwardly and have a guide surface for the clamping jaws (8).

11. A drilling chuck according to claim 1 or claim 2 **characterised in that** the snap connection is formed by a snap ring (34) which can be inserted into an annular groove (35) which extends in the peripheral direction and which is provided on the chuck body (1).

12. A drilling chuck according to claim 11 **characterised in that** the snap ring (34) comprises metal and is not closed in the peripheral direction.

13. A drilling chuck according to one of claims 1 to 12 **characterised in that** an inclined run-on surface (36) is provided at the axially forward end of the chuck body (1).

14. A drilling chuck according to one of claims 1 to 3 **characterised in that** disposed on the axially forward end of the clamping sleeve (12) is a protective cap (37) which is secured by a circlip (38) engaging into the annular groove (35) which extends in the peripheral direction and which is provided on the chuck body (1).

15. A drilling chuck according to claim 14 **characterised in that** the circlip (38) is formed by the snap ring (34).

## Revendications

1. Mandrin porte-foret avec un corps de mandrin (1) qui comporte un logement de broche (3) dans sa partie postérieure (2), vu dans la direction axiale, et un logement d'outil (5) dans sa partie antérieure (4), vu dans la direction axiale, et dans lequel sont aménagés des trous de guidage (7) inclinés pour les mors de serrage (8) qui, par une denture (10), sont en prise avec un filetage de serrage d'une bague de serrage (11), solidaire en rotation d'une bague intermédiaire (18), avec en outre un manchon de serrage (12) pour le réglage de la bague de serrage (11), qui peut tourner de manière limitée par rapport à la bague intermédiaire (18) et avec un dispositif de verrouillage (13), prévu entre le manchon de serrage (12) et le corps de mandrin (1), comprenant une couronne d'échancrures de verrouillage (14) et un organe de verrouillage (15) qui peut être déplacé d'une position en prise avec les échancrures de verrouillage (14) dans une position hors de prise d'avec les échancrures de verrouillage (14), **caractérisé en ce que** les échancrures de verrouillage (14) sont aménagées dans une bague de palier (23) servant de support arrière, vu dans la direction axiale, à la bague de serrage (11), **en ce que** la bague de palier (23) et la bague de serrage (11) sont réalisés d'une pièce, non fendue, avec un diamètre intérieur qui est supérieur au diamètre extérieur de la partie antérieure (4) du corps, vu dans la direction axiale, et **en ce que** la bague de serrage (11) prend appui sur la bague intermédiaire (18), que la bague intermédiaire prend appui sur le manchon de serrage (12) et que celui-ci, à son tour, prend appui vers l'avant, dans la direction axiale, sur le corps de mandrin (1) par l'intermédiaire d'une liaison encliquetée.

2. Mandrin de perçage selon la revendication 1, **caractérisé en ce que** le manchon de serrage (12) comporte une surface d'appui (22), qui vient en appui sur la partie antérieure (4) du corps et assure le guidage radial, laquelle surface s'étend axialement vers l'arrière jusqu'au débouché des trous de guidage (7) des mors de serrage (8) dans le corps de mandrin (1).

3. Mandrin de perçage selon la revendication 1 ou 2, **caractérisé en ce que** la liaison encliquetée est formée d'un nez d'encliquetage (25) qui pénètre dans une gorge (26) périphérique, aménagée dans la partie antérieure (4) du corps et est disposé dans un évidement (27) du manchon.

4. Mandrin de perçage selon la revendication 3, **caractérisé en ce que** plusieurs nez d'encliquetage (25) sont régulièrement répartis sur le pourtour.

5. Mandrin de perçage selon une des revendications 1 à 4, **caractérisé en ce que** la bague intermédiaire (18) comporte un épaulement annulaire (28), en tant que palier pour la bague de serrage (11).

6. Mandrin de perçage selon une des revendications 1 à 5, **caractérisé en ce qu'**une plaque de fermeture (29) servant au guidage radial du manchon de serrage (12) est disposée à l'extrémité arrière du corps de mandrin (1).

7. Mandrin de perçage selon la revendication 6, **caractérisé en ce que** la plaque de fermeture (29) est fixée au corps. de mandrin (1) dans la direction axiale par une liaison à encliquetage.

8. Mandrin de perçage selon la revendication 7, **caractérisé en ce qu'**une gorge annulaire (30) et, dans le voisinage de celle-ci, un épaulement (31) sont aménagés sur la partie postérieure (2) du corps et **en ce que** la plaque de fermeture (29) comporte une bague (32) qui vient en appui sur l'épaulement (31), pénètre dans la gorge (30) et qui, grâce aux ouvertures (33) prévues dans la plaque de fermeture (29), peut s'écarter aux abords de la paroi de gorge et s'engager dans la gorge annulaire (30).

9. Mandrin de perçage selon une des revendications 1 à 8, **caractérisé en ce que** la bague de palier (23) comporte des pattes (24) qui s'engagent dans les guides (7) des mors de serrage (8).

10. Mandrin de perçage selon la revendication 9, **caractérisé en ce que** les pattes (24) s'étendent axialement vers l'avant et présentent une surface de guidage pour les mors de serrage (8).

11. Mandrin de perçage selon la revendication 1 ou 2, **caractérisé en ce que** la liaison encliquetée est formée d'une bague d'encliquetage (34) qui peut être insérée dans une gorge annulaire (35) périphérique aménagée dans le corps de mandrin (1).

12. Mandrin de perçage selon la revendication 11, **caractérisé en ce que** la bague d'encliquetage (34) est en métal et n'est pas fermée dans la direction périphérique.

13. Mandrin de perçage selon une des revendications 1 à 12, **caractérisé en ce qu'**un chanfrein d'entrée (36) est aménagé à l'extrémité antérieure du corps de mandrin (1), vu dans la direction axiale.

14. Mandrin de perçage selon une des revendications 1 à 13, **caractérisé en ce qu'**une coiffe de protection (37) est disposée sur l'extrémité antérieure, vu dans la direction axiale, du manchon de serrage (12), laquelle coiffe est tenue par un anneau élastique (38) monté dans une gorge annulaire (35) périphérique, prévue sur le corps de mandrin (1).

15. Mandrin de perçage selon la revendication 14, **caractérisé en ce que** le anneau élastique (38) est formé par la bague d'encliquetage (34).
